# EUROPEAN PATENT SPECIFICATION

(11) **EP 3 533 931 B1**
(45) Date of publication and mention of the grant of the patent: **30.11.2022**
(21) Application number: 17864397.9
(22) Date of filing: 16.10.2017
(51) Int. Cl.: E01F 7/04, E02D 17/20

(54) **HIGH-STRENGTH WIRE MESH AND ROCK FALL PREVENTION NET**
HOCHFESTES DRAHTGITTER UND NETZ ZUR VERHINDERUNG VON STEINSCHLÄGEN
TREILLIS MÉTALLIQUE À HAUTE RÉSISTANCE ET FILET DE PRÉVENTION DE CHUTE DE ROCHE

(30) Priority: 31.10.2016 JP 2016213130
(43) Date of publication of application: 04.09.2019
(73) Proprietor: Tokyo Rope Mfg. Co., Ltd., Tokyo 105-8306 (JP)
(72) Inventor: ARITA, Takeshi, Tokyo 103-8306 (JP); HIRASE, Masashi, Tokyo 103-8306 (JP); ISHIMOTO, Kazuhiro, Tokyo 103-8306 (JP); TAKAMORI, Kiyoshi, Tokyo 103-8306 (JP); OKAYAMA, Takahiro, Tokyo 103-8306 (JP)
(74) Representative: reuteler & cie SA
(86) International application number: PCT/JP2017/037333
(87) International publication number: WO 2018/079320

(56) References cited:
- WO-A1-2018/137968
- CH-A2- 703 929
- JP-A- S5 212 386
- JP-A- 2015 516 799
- JP-A- 2016 121 432
- JP-A- 2016 523 324
- US-A1- 2015 041 599
- US-A1- 2016 145 816
- US-B1- 6 279 858

## Description

### Technical Field

The present invention relates to a high-strength wire mesh formed by a wire having a high tensile strength, and a rock fall prevention net using the high-strength wire mesh.

### Background Art

A wire mesh is often used in facilities or construction methods directed to the prevention of or protection against rock falls on a slope surface, etc., and as one of these construction methods, there is a construction method in which a wire mesh having a high strength is spread along a slope surface to stabilize the slope surface.

Prior art related to this construction method is described in patent document 1.

### Citation List

### Patent Literature

Patent Document 1: JP2001-522422 A

US2015041599A1 relates to net, in particular for protection, safety, water-rearing or architectural purposes which is braided together from individual helically or similarly bent longitudinal elements, such as wires, to form a braided structure, individual longitudinal elements curved into a cylinder or screw shape or similar being twisted one inside the other with adjacent ones and being compressed such that the braided structure forms a more or less planar sheet-like form and the longitudinal elements here each form more or less rectilinear limbs and curves therebetween.

CH703929A2 discloses a safety net, in particular for protection against falling rocks or for securing an embankment, with a diagonal netting is formed by a three-dimensional mattress-type structure. It is woven here from individual wire strands, wire bundles, wire ropes or similar woven in coil shapes, which comprise two or more wires or wire strands made of steel.

US2016145816A1 relates to a net as a securing or safety net for securing rocks or rock slopes, and against rock falls, landslides or similar natural hazards, wherein said net contains filament yarns from the group of multi- and/or monofilament yarns that are combined in a knot-free manner.

US6279858B1 concerns wire netting for a gravel screen or for protecting a soil surface layer which is woven from corrosion-resistant wires and is either placed on the surface of the soil or is secured in an almost upright position on a slope or something similar. WO2018137968A1 relates to a wire mesh, in particular a safety net, comprising multiple coils which are braided into one another and at least one coil of which is made of at least one individual wire, a wire bundle, a wire strand, a wire rope, and/or another longitudinal element with at least one wire, in particular a high-strength steel wire.

### Summary of Invention

### Technical Problem

Patent document 1 describes a wire mesh formed by a steel wire having a high tensile strength directed to reduce the weight of the wire mesh. When considering using a wire mesh for facilities or construction methods directed to the prevention of or protection against rock falls on a slope surface, etc., although in terms of workability during installation, it is better to reduce the weight of the wire mesh by making the wire mesh stronger, by merely using a wire mesh having a high strength and a light weight, there is a risk that fitness to the slope surface becomes poor. That is, because a wire having a high strength is basically highly restitutive, there is a risk that the followability to the unevenness of the slope surface becomes poor.

Poor fitness to the slope surface (low followability to the unevenness of the slope surface) indicates that a gap occurs easily between the slope surface and the wire mesh and that the adhesion of the slope surface and the wire mesh to each other decreases, and thus, poor fitness to the slope surface is disadvantageous in terms of "stabilizing the soil of the slope surface".

In view of the problem described above, the purpose of the present invention is to provide a high-strength wire mesh that is formed by a wire having a high tensile strength and that has the followability to the unevenness of a slope surface, and a rock fall prevention net using the high-strength wire mesh.

### Solution to Problem

The problem, in accordance with claim 1, is solved by a high-strength wire mesh formed by a wire having a tensile strength exceeding 2200 MPa, and having an amount of deflection of 707 mm or greater as a net body under following conditions,
conditions: a length of a cantilever beam that supports the net body in a line wire direction in a cantilevered state is 1000 mm, and an amount of displacement in a vertical direction of a free end at this situation is defined as the amount of deflection.

The high-strength wire mesh is a rhombus wire mesh.

### The high-strength wire mesh

is the rhombus wire mesh, and the wire mesh has a thickness of 30 mm to 70 mm by forming a line wire constituting the rhombus wire mesh in a helical shape having a thickness.

The high-strength wire mesh may comprise an annular portion having a length of one round or greater of the helix which is formed at an end portion of the line wire constituting the rhombus wire mesh and formed in a helical shape.

The high-strength wire mesh may have a configuration wherein a tensile strength of the wire is 2800 MPa or less.

The high-strength wire mesh according to claim 1 has a configuration wherein 50 m or greater of the wire is used to knit 1 m² of the wire mesh.

The high-strength wire mesh may have a configuration wherein the wire diameter of the wire is 2.0 mm.

A rock fall prevention net may be formed by the high-strength wire mesh according to the previous configurations

### Advantageous Effects of Invention

With the high-strength wire mesh according to the present invention and a rock fall prevention net using the high-strength wire mesh, it is possible to form the high-strength wire mesh by a wire having a high tensile strength and provide the wire mesh with the followability to the unevenness of a slope surface.

### Brief Description of Drawings

FIGS. 1A and 1B are diagrams illustrating a high-strength wire mesh according to an embodiment of the present invention.
FIG. 2 is a diagram illustrating an end portion of the high-strength wire mesh according to the embodiment of the present invention.
FIG. 3 is a diagram illustrating a state in which the line wire of the high-strength wire mesh according to the embodiment of the present invention is folded by sliding the line wire.
FIG. 4 is a schematic view illustrating a state in which the wire mesh is supported in a cantilevered state.
FIGS. 5A to 5C illustrate graphs indicating, for each of a conventional rhombus wire mesh, a conventional thick net, and a high-strength wire mesh 1 according to the present embodiment, the relationship between the length of a cantilever beam and the amount of deflection.
FIGS. 6A and 6B are diagrams illustrating another example of the high-strength wire mesh according to the present invention.
FIG. 7 is a diagram illustrating an installed state of a rock fall prevention net using the high-strength wire mesh according to the present invention.
FIGS. 8A to 8C are schematic views illustrating the installation steps of the rock fall prevention net.
FIG. 9 is a schematic view illustrating the configuration of the rock fall prevention net.

### Description of Embodiments

Next, embodiments of the present invention will be described in detail with reference to figures. Note that the embodiments described below are only examples of the present invention, and the present invention is not limited to these embodiments in any way.

### Embodiment 1

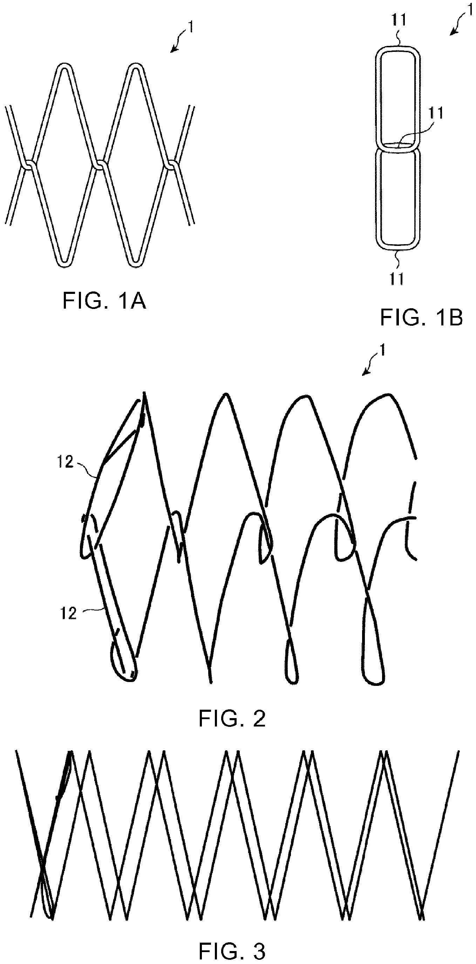

FIGS. 1A, 1B and 2 are diagrams illustrating a high-strength wire mesh according to the present embodiment. FIG. 1A is a front view, FIG. 1B is a side view, and FIG. 2 is a diagram illustrating an end portion. Note that the diagrams illustrate only two line wires for simplification (this structure is repeated to form the entire wire mesh).

A high-strength wire mesh 1 according to the present embodiment is formed by a wire having a tensile strength exceeding 2300 MPa (wire having a tensile strength exceeding 2200 MPa and less than or equal to 2800 MPa) as a thick net. Although the thick net has a similar basic form to a rhombus wire mesh, the thick net is formed as a wire mesh having a predetermined thickness by forming a line wire constituting the rhombus wire mesh in a thick helical shape.

Specifically, the thick net is formed as a rhombus wire mesh having a mesh size of 42 mm, a wire mesh angle of 30°, and a line intersection number per 1 m of 23.8 by a wire having a wire diameter of 2.0 mm, and is formed to have a thickness of 30 mm by forming the helix of the line wire in an approximately rectangular shape (including an approximately linear rising portion 11) in side view as illustrated in FIG. 1B. The wire mesh tensile strength of the high-strength wire mesh 1 is 197.1 kN/m.

By forming the high-strength wire mesh 1 by a wire having a high tensile strength, it is possible to obtain a required strength with a thin wire diameter (2.0 mm), and to form the high-strength wire mesh 1 to have a light weight, i.e., a weight per 1 m² of 1.45 kg.

In the high-strength wire mesh 1, the length of a cantilever beam that supports the high-strength wire mesh 1 in a line wire direction in a cantilevered state is 1000 mm, and the amount of deflection, which is the amount of displacement in the vertical direction of a free end at this situation, is 977 mm equivalent.

The high-strength wire mesh 1 is a flexible wire mesh having the amount of deflection of 977 mm (707 mm or greater) equivalent as described above, while achieving weight reduction by using a high-strength wire having a tensile strength of 2300 MPa, and for example, in a case that the high-strength wire mesh 1 is used in a facility or a construction method directed to the prevention of or protection against rock falls on a slope surface, etc., the high-strength wire mesh 1 has good fitness to the slope surface (followability to the unevenness of the slope surface), a gap hardly occurs between the slope surface and the wire mesh, and thus the soil of the slope surface can be stabilized.

Although the above-described problem about the fitness to the slope surface does not occur if the slope surface is flat, there are many uneven portions on the actual slope surface. Although there are many sizes of unevenness and many types of corner R of the unevenness on a natural slope land and it is difficult to generalize the sizes and the types, considering the unevenness from a flat surface (0°) to a vertical cliff (90°), the intermediate value of the unevenness is 45°. If the wire mesh fits to the unevenness of 45° with the self-weight of the wire mesh, the wire mesh is deflected at approximately 45 degrees when the wire mesh is supported in a cantilevered state.

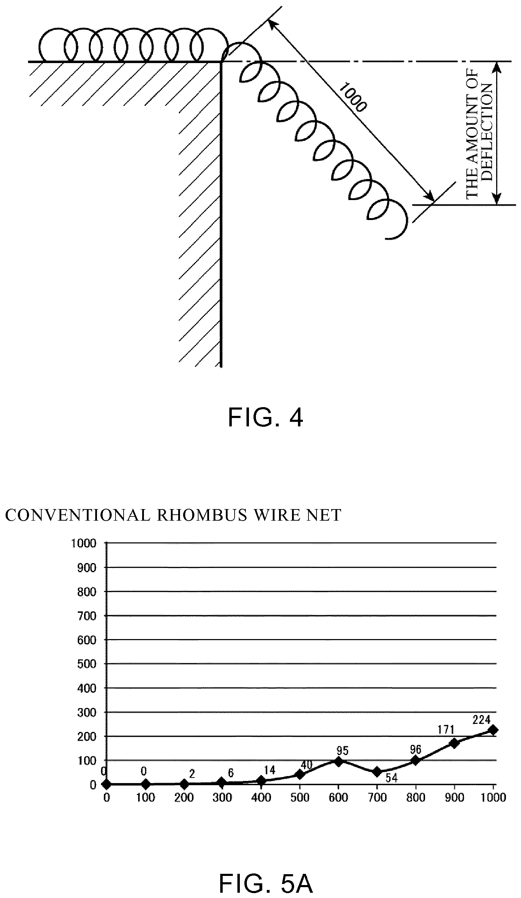

FIG. 4 is a schematic view illustrating a state in which the wire mesh is supported in a cantilevered state. Although this is a simplified view and the wire mesh in a cantilevered state is linearly deflected, the wire mesh is actually deflected in an arc shape. In this deflection in an arc shape, when a line connecting a support end and a free end forms an angle of 45°, it is considered that "the wire mesh fits to the unevenness of 45° with the self-weight of the wire mesh". The condition for realizing this state is that the amount of deflection is approximately 707 mm in a case that the length of a cantilever beam is 1000 mm as illustrated in FIG. 4.

Thus, in a case that the length of a cantilever beam that supports a net body in a line wire direction in a cantilevered state is 1000 mm, the amount of displacement in the vertical direction of a free end at this situation is the amount of deflection, and the amount of deflection is 707 mm or greater, it is considered that the net body has good fitness to a slope surface (followability to the unevenness of the slope surface) under the above-described condition.

As a method for forming a wire mesh having a large amount of deflection, there is a method in which the length of a wire to be used per unit area is increased.

For example, when considering a line wire having a certain length, in a case that a wire to be used for the line wire is made shortest, a mere linear wire is formed (though this is not considered to be a line wire). When the amount of wire to be used is increased without changing the length as a line wire, the number of turns of the helix of the line wire (or the size of the helix) is increased. Here, when comparing the mere linear wire with the helical line wire that has the same length as a line wire but uses a longer length of wire and that has a large number of turns, the latter has a greater amount of deflection. Thus, by increasing the length of wire to be used per unit area, it is possible to form a wire mesh having a large amount of deflection.

In a case that a wire having a tensile strength exceeding 2200 MPa and a wire diameter of 2 mm is used, 50 m or greater of the wire may be used to knit a wire mesh of 1 m². By doing this, in a case that the length of a cantilever beam that supports a net body in a line wire direction in a cantilevered state is 1000 mm, the amount of deflection can be made approximately 707 mm or greater. Note that it is more preferable to use 55 m or greater of a wire to knit a wire mesh of 1 m². In the high-strength wire mesh 1 according to the present embodiment, 58 m of a wire is used to knit a wire mesh of 1 m².

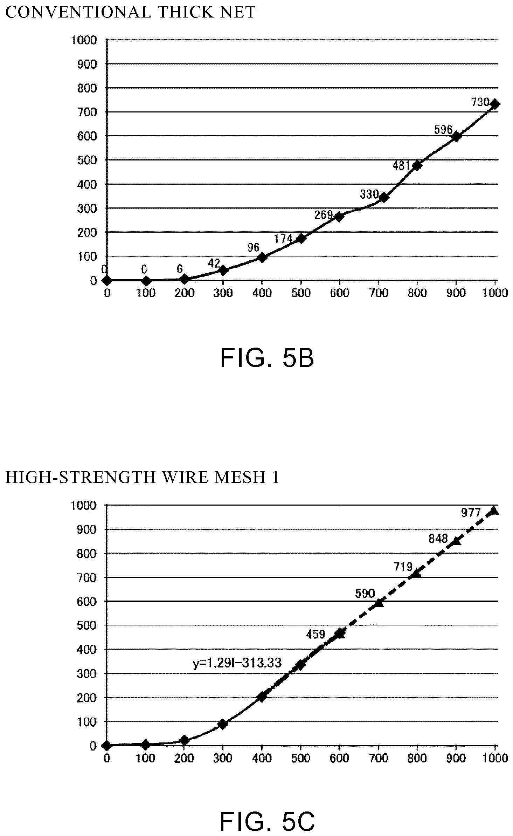

FIGS. 5A to 5C illustrate, for each of a conventional rhombus wire mesh, a conventional thick net, and the high-strength wire mesh 1 according to the present embodiment, the result of measuring the amount of deflection while changing the length of a cantilever beam, in a case that each wire mesh is supported in a cantilevered state as illustrated in FIG. 4. The horizontal axis represents the length of the cantilever beam, and the vertical axis represents the amount of deflection.

The "conventional rhombus wire mesh" is a rhombus wire mesh formed by a wire having a wire diameter of 3.2 mm (tensile strength: 450 MPa), and having a mesh size of 67.6 mm, a wire mesh angle of 85°, and a line intersection number per 1 m of 14.8. In addition, the "conventional thick net" is formed by a wire having a wire diameter of 3.2 mm (tensile strength: 400 MPa), has a mesh size of 46 mm, a wire mesh angle of 85°, and a line intersection number per 1 m of 21.7, and is formed to have a thickness of 30 mm by forming the helix of a line wire in an approximately rectangular shape (including the approximately linear rising portion 11) in side view as in FIG. 1B.

Note that, for the high-strength wire mesh 1, due to the experimental sample, the length of the cantilever beam was measured every 100 mm up to 600 mm (solid line), and the length exceeding 600 mm (dashed line) was indicated by extending an approximate curve (the actual result was a straight line) obtained from actual measurement values.

As illustrated in FIG. 5A, the conventional rhombus wire mesh has the amount of deflection of approximately 315 mm when the length of the cantilever beam is 1000 mm, and does not have a very good fitness to a slope surface with the self-weight of the wire mesh. Meanwhile, the conventional thick net has the amount of deflection of approximately 730 mm when the length of the cantilever beam is 1000 mm, and thus is considered to have a required amount of fitness to a slope surface. However, this conventional thick net does not use a steel wire having a high tensile strength and thus requires a certain thickness to obtain a required strength, and has a relatively large weight (3.7 Kg/m²) accordingly. Because less weight is better when considering transportation costs and installation work efficiency on a slope, it is conceivable to reduce weight by using the steel wire having a high tensile strength. However, high strength or reduced weight is a negative factor in terms of the "fitness to a slope surface with the self-weight". Meanwhile, the high-strength wire mesh 1 according to the present embodiment does not only have "a high strength and a light weight" as a wire mesh, but also considers the balance among strength, self-weight, etc. And thus, the high-strength wire mesh 1 is a flexible wire mesh having the amount of deflection of 977 mm equivalent as illustrated in FIG. 5C and has good fitness to a slope surface (followability to the unevenness of the slope surface), and a gap hardly occurs between the slope surface and the wire mesh. That is, the high-strength wire mesh 1 is excellent in terms of transportation costs and installation work efficiency on a slope, as well as the stabilization of the soil of the slope surface.

In addition, in the high-strength wire mesh 1 according to the present embodiment, as illustrated in FIG. 2, an annular portion 12 having a length of one round or greater of a helix are formed at an end portion of a helically-formed line wire.

In a conventional wire mesh, a cut end portion of the wire mesh is left in a rough-hewn state or subjected to knuckle processing. In a case that the cut end portion of the wire mesh is left in a rough-hewn state, there is a risk that a worker is caught by the tip portion of the end portion, etc, and as a result, work efficiency deteriorates and the worker, etc. gets injured. Although this kind of problem is suppressed by subjecting the end portion to knuckle processing, in a case that the end portion is subjected to conventional knuckle processing (e.g., FIG. 1 in patent document 1), it becomes impossible to slide and fold the line wire of the wire mesh (make the wire mesh compact for transportation, etc.). Meanwhile, with the high-strength wire mesh 1 according to the present embodiment, by forming the annular portion 12 at the end portion as illustrated in FIG. 2, the work efficiency deterioration, worker's injury, etc. are suppressed, and, as illustrated in FIG. 3, it becomes possible to link the annular parts 12 of adjacent line wires with each other while allowing the line wires to be slid and folded (and unfolded) smoothly, which is very useful.

In the present embodiment, as an example of the high-strength wire mesh according to the present invention, the thick net having the approximately linear rising portion 11 as illustrated in FIG. 1B has been described, but it suffices that the high-strength wire mesh according to the present invention is formed by a wire having a tensile strength exceeding 2200 MPa and has a configuration in which the amount of deflection as a net body is 707 mm or greater.

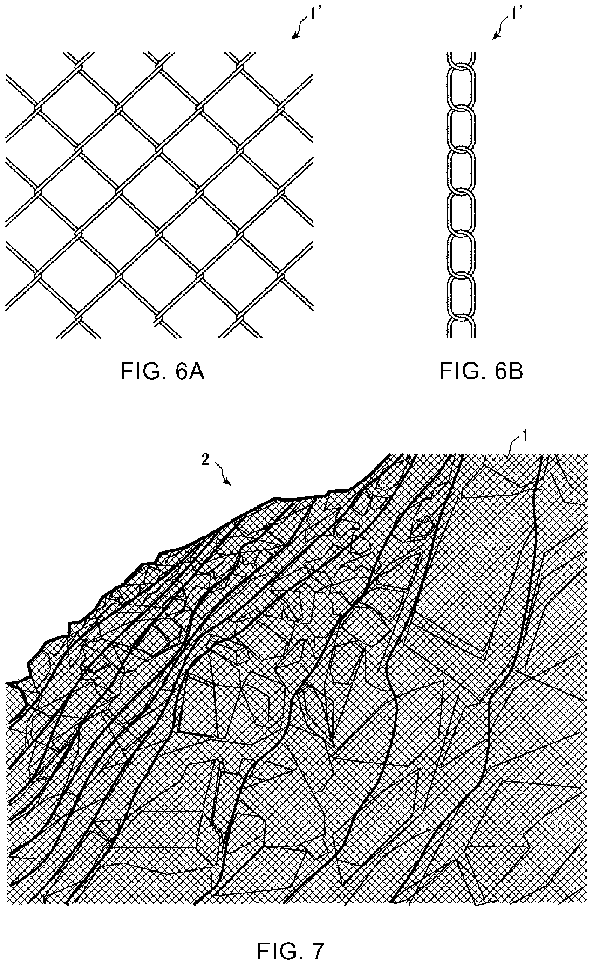

FIGS. 6A and 6B illustrate another example of the high-strength wire mesh according to the present invention. The high-strength wire mesh 1' illustrated in FIGS. 6A and 6B (FIG. 6A: front view, FIG. 6B: top view) is formed as a rhombus wire mesh. Specifically, the high-strength wire mesh 1' is formed by a wire having a wire diameter of 2.0 mm, is formed as a rhombus wire mesh having a mesh size of 54 mm, a wire mesh angle of 85°, and a line intersection number per 1 m of 18.5, and has a wire mesh tensile strength of 197.1 kN/m.

By forming the high-strength wire mesh 1' by a wire having a high tensile strength, it is possible to obtain a required strength with a thin wire diameter (2.0 mm), and to form the high-strength wire mesh 1' to have a light weight, i.e., a weight per 1 m² of 1.15 kg.

While satisfying requirements as the high-strength wire mesh according to the present invention, i.e., requirements that the high-strength wire mesh is formed by a wire having a tensile strength exceeding 2200 MPa and has the amount of deflection of 707 mm or greater as a net body, the wire diameter of the wire may be 1.0 mm or greater and 3.0 mm or less, and the tensile strength of the wire may be 2800 MPa or less.

In a case that the wire diameter of a wire having a tensile strength exceeding 2200 MPa is less than 1.0 mm, there is a risk that a yield decreases significantly due to a crack or bend occurring when the wire is processed for manufacturing a wire mesh. In addition, in current ordinary manufacturing facilities, it is difficult to make the wire diameter of a wire having a tensile strength exceeding 2200 MPa exceed 3.0 mm. Similarly, it is difficult to manufacture a wire having a tensile strength exceeding 2800 MPa in current ordinary manufacturing facilities.

Note that "the amount of deflection of 707 mm or greater as a net body" is achieved by combining, as appropriate, the selection of the strength or wire diameter of "a wire having a tensile strength exceeding 2200 MPa" and the selection of various types of sizes (i.e., mesh size, wire mesh angle, thickness, etc. as a wire mesh) when the wire is formed in a helical shape.

### Embodiment 2

Embodiment 2 is a rock fall prevention net formed by the high-strength wire mesh 1 according to embodiment 1, and FIG. 7 is a schematic perspective view illustrating a rock fall prevention net 2 provided in a slope surface shape.

The rock fall prevention net 2 makes it possible to prevent the occurrence of rock falls on a slope surface, etc. and promote greening.

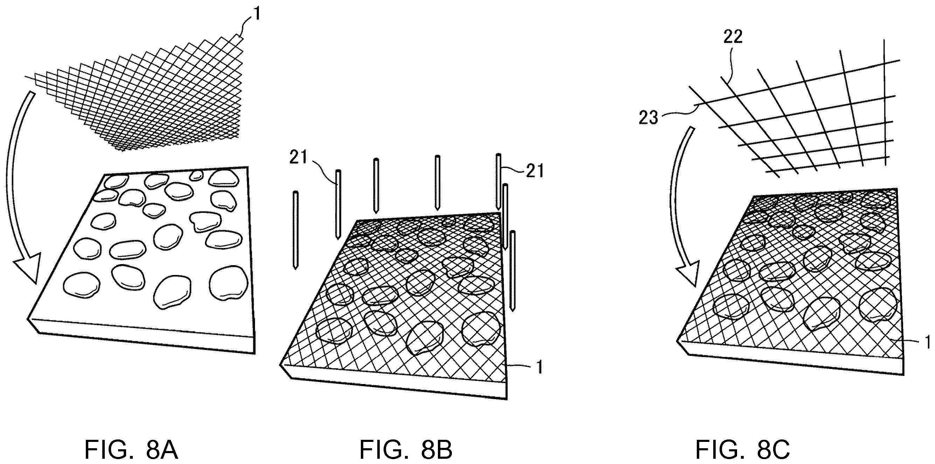

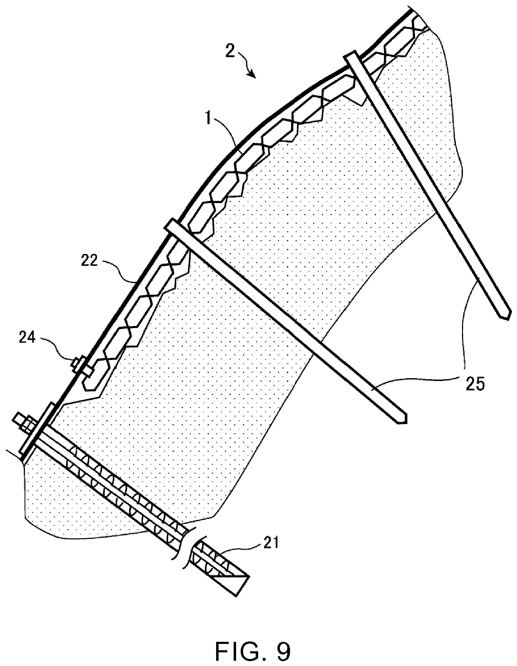

FIGS. 8A to 8C are diagrams illustrating the outline of the construction steps of the rock fall prevention net 2, and FIG. 9 is a schematic view illustrating the configuration of the rock fall prevention net 2.

The rock fall prevention net 2 according to the present embodiment 2 has basically the same configuration as that of a conventional rock fall prevention net except that the high-strength wire mesh 1 according to embodiment 1 is used as a wire mesh, and thus, the detailed description of the rock fall prevention net 2 is omitted here, but the rock fall prevention net 2 includes the high-strength wire mesh 1 spread over an entire target area for stabilizing a slope surface, a vertical rope 22 and a horizontal rope 23 for reinforcing and holding the high-strength wire mesh 1, various types of connection members (clip 24, etc.) for connecting these members to each other, and various types of anchors (cement anchor 21, pin anchor 25, etc.) for installing on the slope surface.

By using the high-strength wire mesh 1 according to embodiment 1, the rock fall prevention net 2 according to the present embodiment has a light weight and thus is excellent in terms of workability, transportation costs, etc., and because the rock fall prevention net 2 is flexible and has good fitness to a slope surface (followability to the unevenness of the slope surface), a gap hardly occurs between the slope surface and the wire mesh, and the soil of the slope surface can be stabilized.

That is, with the amount of deflection of 707 mm or greater as a net body in the line wire direction of the high-strength wire mesh 1, it is possible for the high-strength wire mesh 1 to fit along the unevenness of the slope surface with the self-weight of the wire mesh, as described in embodiment 1. In addition, in a direction orthogonal to the line wire of the high-strength wire mesh 1, the helix of the line wire is formed in an approximately rectangular shape (has the approximately linear rising portion 11) in side view, and thus, it is possible for adjacent line wires to slide with respect to each other (to slide with respect to each other in the left-right direction in FIG. 1B), and also in this direction, good fitness to the slope surface (followability to the unevenness of the slope surface) is obtained.

As is obvious from these features, in the construction of the rock fall prevention net 2, excellent workability is provided by the light weight, and because the high-strength wire mesh 1 fits to the unevenness of the slope surface with the self-weight of the wire mesh when being spread over the slope surface, excellent workability is also provided in the work of fixing the high-strength wire mesh 1 to the slope surface by means of various types of anchors, etc.

In a case of a rock fall prevention net using a conventional high-strength wire mesh, the rock fall prevention net has high restitution because of the high strength and the light weight of the wire mesh, and thus has low followability to the unevenness of a slope surface with the self-weight of the wire mesh. That is, in a state in which the high-strength wire mesh is spread over the slope surface, there occur raised portions with respect to the unevenness of the slope surface, and the workability of the work of fastening the wire mesh by means of anchors, etc becomes poor in these loose portions. In addition, if there are portions having poor fitness to the slope surface and raised in an installed state, loose stones, etc. are likely to occur in these portions and rock falls occur accordingly. Although the rock falls themselves are accommodated in the wire mesh (accumulated in the lower portion of the wire mesh), there is a risk that the wire mesh is swollen as more rock falls are accumulated, and the work of eliminating these accumulated rock falls is required. To suppress this problem, it is necessary to closely adhere the net and the slope surface to each other to suppress loose stones themselves, but in the case of the rock fall prevention net using a conventional high-strength wire mesh, the rock fall prevention net has high restitution because of the high strength of the wire mesh, and there occur many raised portions of the wire mesh with respect to the slope surface. Thus, to closely adhere the wire mesh and the slope surface to each other entirely, more pin anchors, fastening tools, etc. are required, and this is disadvantageous in terms of work efficiency and costs. In addition, the feature wherein portions that are raised because of the restitution force are fastened by the pin anchors, etc. to be closely adhered to the slope surface indicates that the wire mesh is installed in a state in which the restitution force is always generated in the pulling direction of the pin anchors, etc., and thus, there is a risk that the pin anchors, etc. come off when a slight vibration such as an earthquake occurs.

Meanwhile, with the rock fall prevention net 2 according to the present embodiment, excellent workability is provided during construction as described above, loose stones, etc. are suppressed by the high followability to the unevenness of the slope surface, and the soil of the slope surface can be stabilized efficiently.

The rock fall prevention net 2 is also suitable for a base material of various types of slope surface reinforcement construction such as soil dressing seed spraying construction or mortar-concrete spraying construction.

A rock fall prevention net 2 as in claim 1 may be used as a base material of soil dressing seed spraying construction, the thickness of the high-strength wire mesh 1 being made 30 mm to 70 mm. If the thickness is less than 30 mm, there is a problem that the thickness of a layer to be sprayed does not have enough thickness and cracks occur easily, and if the thickness exceeds 70 mm, there is a problem that the weight of the layer to be sprayed is excessive and collapse occurs easily.

Note that, although in embodiment 2, the rock fall prevention net provided on a slope surface to stabilize the slope surface was described as an example of using the high-strength wire mesh 1 according to embodiment 1, the application of the high-strength wire mesh 1 according to embodiment 1 is not limited to this rock fall prevention net, and the high-strength wire mesh 1 can be used for many purposes.

For example, the high-strength wire mesh according to the present invention may be used as a rock fall protection net provided vertically or perpendicularly to a slope face. Because the high-strength wire mesh according to the present invention has a high strength and flexibility as described above, and also has high energy absorption ability, the high-strength wire mesh is also suitable as a rock fall protection net for receiving the impact of rock falls, etc.

### Reference Signs List

- 1: High-strength wire mesh
- 11: Rising portion
- 12: Annular portion
- 2: Rock fall prevention net
- 21: Cement anchor
- 22: Vertical rope
- 23: Horizontal rope
- 24: Clip
- 25: Pin anchor

## Claims

1. A high-strength wire mesh (1, 1') formed by a wire having a tensile strength exceeding 2200 MPa, wherein
the wire mesh is a rhombus wire mesh and 50 m or a greater length of wire is used to knit 1 m² of the wire mesh, **characterized in that**
the wire mesh has a thickness of 30 mm to 70 mm by forming a line wire constituting the rhombus wire mesh in a helical shape,
wherein the wire tensile strength, the wire diameter, a mesh size, a wire mesh angle and the wire mesh thickness are selected such that an amount of deflection of 707 mm or greater occurs, when a net body is subjected to the following conditions: a length of a cantilever beam that supports the net body in a line wire direction in a cantilevered state where the cantilevered net body extends freely in a horizontal direction is 1000 mm, and an amount of displacement in a vertical direction of a free end of the cantilevered net body in this situation is defined as said amount of deflection.

2. The high-strength wire mesh according to claim 1, wherein
a wire diameter of the wire is 1.0 mm or greater and 3.0 mm or less.

3. The high-strength wire mesh according to claim 1 or 2, wherein
an annular portion (12) having a length of one round or greater of a helix is formed at an end portion of the line wire constituting the rhombus wire mesh and formed in a helical shape.

4. The high-strength wire mesh according to any one of claims 1 to 3, wherein
a tensile strength of the wire is 2800 MPa or less.

5. The high-strength wire mesh according to claim 1, wherein
the wire diameter of the wire is 2.0 mm.

6. A rock fall prevention net (2) formed by the high-strength wire mesh according to any one of claims 1 to 5.

## Patentansprüche

1. Hochfestes Drahtgeflecht (1, 1'), das durch einen Draht mit einer Zugfestigkeit von mehr als 2200 MPa gebildet wird, wobei
das Drahtgeflecht ein Rautendrahtgeflecht ist und Draht einer Länge von 50 m oder mehr verwendet wird, um 1 m² des Drahtgeflechts zusammenzuknüpfen, **dadurch gekennzeichnet, dass**
das Drahtgeflecht durch Bilden eines Leitungsdrahts, der das Rautendrahtgeflecht konstituiert, in einer Spiralform eine Dicke von 30 mm bis 70 mm aufweist,
wobei die Drahtzugfestigkeit, der Drahtdurchmesser, eine Geflechtgröße, ein Drahtgeflechtwinkel und eine Drahtgeflechtdicke derart ausgewählt werden, dass ein Maß der Durchbiegung von 707 mm oder mehr eintritt, wenn ein Netzkörper den folgenden Bedingungen ausgesetzt wird: eine Länge eines Auslegerbalkens, der den Netzkörper in einer Leitungsdrahtrichtung in einem freitragenden Zustand, in dem sich der freitragende Netzkörper frei in eine horizontale Richtung erstreckt, stützt, beträgt 1000 mm und ein Maß des Versatzes in eine vertikale Richtung eines freien Endes des freitragenden Netzkörpers in dieser Situation als das Maß der Durchbiegung definiert ist.

2. Hochfestes Drahtgeflecht nach Anspruch 1, wobei
ein Drahtdurchmesser des Drahts 1,0 mm oder mehr und 3,0 mm oder weniger beträgt.

3. Hochfestes Drahtgeflecht nach Anspruch 1 oder 2, wobei an einem Endabschnitt des Leitungsdrahts ein Ringabschnitt (12) mit einer Länge von einer Wicklung oder mehr einer Spirale gebildet ist, der das Rautendrahtgeflecht konstituiert und in einer Spiralform gebildet ist.

4. Hochfestes Drahtgeflecht nach einem der Ansprüche 1 bis 3, wobei
eine Zugfestigkeit des Drahts 2800 MPa oder weniger beträgt.

5. Hochfestes Drahtgeflecht nach Anspruch 1, wobei der Drahtdurchmesser des Drahts 2,0 mm beträgt.

6. Steinschlagverhinderungsnetz (2), das durch das hochfeste Drahtgeflecht nach einem der Ansprüche 1 bis 5 gebildet wird.

## Revendications

1. Treillis métallique à haute résistance (1, 1') formé par un fil ayant une résistance à la traction supérieure à 2 200 MPa, dans lequel :
le treillis métallique est un treillis métallique losange et une longueur de fil de 50 m ou plus est utilisée pour tricoter 1 m² de treillis métallique, **caractérisé en ce que** :
le treillis métallique a une épaisseur de 30 mm à 70 mm en formant un fil linéaire constituant le treillis métallique losange en une forme hélicoïdale,
dans lequel la résistance à la traction du fil, le diamètre du fil, une taille de treillis, un angle de treillis métallique et l'épaisseur de treillis métallique sont sélectionnés de sorte qu'une quantité de déflexion de 707 mm ou plus a lieu, lorsqu'un corps de filet est soumis aux conditions suivantes : une longueur d'une poutre en porte-à-faux qui supporte le corps de filet dans une direction de fil linéaire dans un état en porte-à-faux dans lequel le corps de filet en porte-à-faux s'étend librement dans une direction horizontale, est de 1 000 mm et une quantité de déplacement dans une direction verticale d'une extrémité libre du corps de filet en porte-à-faux dans cette situation est définie comme étant ladite quantité de déflexion.

2. Treillis métallique à haute résistance selon la revendication 1, dans lequel :
un diamètre de fil est de 1,0 mm ou plus et de 3,0 mm ou moins.

3. Treillis métallique à haute résistance selon la revendication 1 ou 2, dans lequel :
une partie annulaire (12) ayant une longueur d'une spire ou plus d'une hélice est formée au niveau d'une partie d'extrémité du fil linéaire constituant le treillis métallique losange et formée en une forme hélicoïdale.

4. Treillis métallique à haute résistance selon l'une quelconque des revendications 1 à 3, dans lequel :
une résistance à la traction du fil est de 2 800 MPa ou moins.

5. Treillis métallique à haute résistance selon la revendication 1, dans lequel :
le diamètre de fil du fil est de 2,0 mm.

6. Filet de prévention de chute de roche (2) formé par le treillis métallique à haute résistance selon l'une quelconque des revendications 1 à 5.
